# EUROPÄISCHE PATENTSCHRIFT

(11) **EP 3 160 300 B1**
(45) Veröffentlichungstag und Bekanntmachung des Hinweises auf die Patenterteilung: **02.05.2018**
(21) Anmeldenummer: 15731071.5
(22) Anmeldetag: 25.06.2015
(51) Int. Cl.: A47B 88/493

(54) **AUSZUGSFÜHRUNG FÜR RELATIV ZUEINANDER BEWEGBARE MÖBELTEILE**
PULL-OUT GUIDE FOR FURNITURE PARTS THAT CAN BE MOVED IN RELATION TO EACH OTHER
GUIDAGE TÉLESCOPIQUE POUR PARTIES DE MEUBLES MOBILES LES UNES PAR RAPPORT AUX AUTRES

(30) Priorität: 25.06.2014 DE 102014108854
(43) Veröffentlichungstag der Anmeldung: 03.05.2017
(73) Patentinhaber: Paul Hettich GmbH & Co. KG, 32278 Kirchlengern (DE)
(72) Erfinder: KÄTHLER, Andreas, 32278 Kirchlengern (DE); JAEKEL, Steffen, 32120 Hiddenhausen (DE); FRANKE, Thomas, 32257 Bünde (DE); MERTENS, Janine, 32051 Herford (DE); BÜSCHER, Reinhard, 32257 Bünde (DE)
(74) Vertreter: Kleine, Hubertus
(86) Internationale Anmeldenummer: PCT/EP2015/064336
(87) Internationale Veröffentlichungsnummer: WO 2015/197743

(56) Entgegenhaltungen:
- EP-B1- 1 959 794
- WO-A1-2015/109345
- US-A- 5 417 496
- US-A1- 2006 091 770

## Beschreibung

Die Erfindung betrifft eine Auszugsführung für relativ zueinander bewegbare Möbelteile mit mindestens zwei Auszugsschienen mit mindestens einer Lauffläche. Zwischen den Auszugsschienen ist mindestens ein erster Wälzkörper und mindestens ein zweiter Wälzkörper angeordnet, die in einem Wälzkörperkäfig drehbar gehalten sind, wobei der mindestens eine erste und der mindestens eine zweite Wälzkörper einen gleichen nominellen Durchmesser aufweisen.

Auszugsführungen für relativ zueinander bewegbare Möbelteile, wie zum Beispiel für Schubkästen, die in einem Möbelkorpus bewegbar gelagert sind, sind aus dem Stand der Technik bekannt, beispielsweise aus der Druckschrift DE 3 536 654 C2. Als Wälzkörper werden in dem Wälzkörperkäfig drehbar gelagerte zylindrische Rollen oder Kugeln eingesetzt. Häufig werden dabei "harte" Stahlkugeln oder -rollen verwendet, da sie auch bei hohen mechanischen Belastungen durch ein großes Gewicht, das von der Auszugsführung bewegbar gelagert wird, eine leichtgängige Führung ermöglichen. Nachteilig kann dabei jedoch ein lautes Rollgeräusch sein.

Zur Verminderung der Rollgeräusche ist bei Schubkästen, die kein außergewöhnlich hohes Gewicht tragen müssen, bekannt, Kunststoffwälzkörper zu verwenden. Bei Kunststoffwälzkörpern besteht jedoch die Problematik, dass längere Standzeiten zu einem Abplatten der Wälzkörper führen können. Die Abplattung der Kunststoffrollen ist reversibel - durch eine nachfolgende Betätigung der Auszugsführung werden die Kunststoffrollen durchgewalkt und nehmen wieder ihre ursprüngliche runde Form an. Anfänglich kommt es dabei jedoch aufgrund der Abplattungen zu Vibrationen und einem erhöhten Laufgeräusch ("rumpeln").

Die Druckschrift US 5,417,496 A beschreibt eine Auszugsführung, bei der innerhalb eines Wälzkörperkäfigs Stahl- und Kunststoffkugeln als Wälzkörper eingesetzt sind. Die Druckschrift adressiert das Problem, dass insbesondere an den Ruhepositionen der Stahlkugeln im eingefahrenen Zustand der Auszugsführung die Stahlkugeln Mulden in die Laufflächen der Auszugsschienen eindrücken. Beim Ausfahren der Auszugsführung kann dann das Problem auftreten, dass die Auszugsführung rumpelt, wenn eine solche Vertiefung von einer weiteren Stahlkugeln überfahren wird. Gemäß der Druckschrift D1 wird dieses Problem dadurch gelöst, dass Stahlkugeln so weit vereinzelt werden und in einem so großen Abstand eingesetzt werden, dass sie beim Ausfahren der Auszugsführung die von der nächsten Stahlkugeln geformte Mulde gar nicht erreichen. Ein Abplatten der Kunststoffkugeln und die damit verbundenen Geräusche können dadurch jedoch nicht verhindert werden.

Gemäß der Druckschrift US 2006/0091770 A1 ist bei einem Vollauszug vorgesehen, einen Wälzkörper eines Wälzkörperkäfigs in einen Abschnitt einlaufen zu lassen, in dem er entlastet ist. Es wird dadurch eine Ablaufsteuerung für den Vollauszug bewirkt, da der Wälzkörperkäfig mit der entlasteten Wälzkörper aufgrund der erhöhten Belastung der verbleibenden Wälzkörper schwergängiger ist, so dass dann ein Auszug an dem anderen Teil des Vollauszugs erfolgt.

In der Druckschrift EP 1 959 794 B1 ist eine Ausziehführung für Schubladen beschrieben, bei der Wälzkörper mit verschiedenen Durchmessern eingesetzt werden. Die Auszugsschienen der Auszugsführung sind dabei derart ausgebildet, dass im Schließzustand der Schublade nur der erste Wälzkörper mit dem kleineren Durchmesser belastet wird. Zu diesem Zweck weist eine der Führungsschienen in einem vorderen Endbereich eine zu den Wälzkörpern hinweisende Erhöhung auf. Nach Öffnen der Schubladen verlässt der erste Wälzkörper den Bereich der Erhöhung, so dass nachfolgend die Führungsschienen auf den zweiten Wälzkörpern mit dem größeren Durchmesser ablaufen. Im Schließzustand der Schublade, also in einem eingefahrenen Zustand der Auszugsführung wird nur der erste Wälzkörper mit dem geringeren Durchmesser belastet, wodurch auch nur dieser Wälzkörper eine Verformung erfährt. Da anschließend eine Führung mithilfe der größeren zweiten Wälzkörper erfolgt, führt der verformte erste Wälzkörper nicht zu einem erhöhten Laufgeräusch.

Nachteilig an dieser Anordnung ist jedoch, dass mit dem ersten Wälzkörper ein zusätzlicher Wälzkörper vorgesehen ist, der im normalen Betrieb der Schublade nicht belastet wird. Dieser zusätzliche erste Wälzkörper hat einen erhöhten Material- und damit Kostenaufwand zur Folge, ohne dass er im Normalbetrieb zu den Laufeigenschaften beträgt. Beispielsweise erhöht er nicht das Maximalgewicht, das die Auszugsführung tragen kann.

Es ist daher eine Aufgabe der vorliegenden Erfindung, eine Auszugsführung bereitzustellen, bei der ein erhöhtes Laufgeräusch nach einer längeren Standzeit der Auszugsführung unterdrückt wird, ohne dass zusätzliche, im normalen Betrieb nicht verwendete Wälzkörper vorgesehen sind. Diese Aufgabe wird durch eine Auszugsführung mit den Merkmalen des unabhängigen Anspruchs gelöst. Vorteilhafte Ausgestaltungen und Weiterbildungen der Auszugsführung sind in den abhängigen Ansprüchen angegeben.

Bei einer erfindungsgemäßen Auszugsführung der eingangs genannten Art weist mindestens eine der Laufflächen einen Freilaufabschnitt auf, in den der mindestens eine erste Wälzkörper in einem eingefahrenen Zustand der Auszugsführung positioniert ist, wobei innerhalb des Freilaufabschnitts die Laufflächen einen größeren Abstand zueinander aufweisen, als außerhalb des Freilaufabschnitts. Die Auszugsführung zeichnet sich dadurch aus, dass innerhalb des Wälzkörperkäfigs mehrere erste Wälzkörper in Längsrichtung der Auszugsführung hintereinander angeordnet sind und dass der Freilaufabschnitt eine Länge aufweist, die mindestens so groß ist wie der maximale Abstand von zwei der mehreren ersten Wälzkörper.

Durch den Freilaufabschnitt wird erreicht, dass im eingefahrenen Zustand der Auszugsführung die mehreren ersten Wälzkörper aus dem Eingriff beider Laufflächen genommen werden. Nur der mindestens eine zweite Wälzkörper trägt somit während der Standzeit die Last. Entsprechend werden auch nur die zweiten Wälzkörper möglicherweise während einer langen Standzeit verformt. Wird die Auszugsführung aus dem eingefahrenen Zustand bewegt, verlässt der mindestens eine erste Wälzkörper den Freilaufabschnitt, gelangt wieder in Eingriff mit beiden regulären Laufflächen und nimmt das von den Auszugsschienen getragene Gewicht bzw. die auf die Auszugsschienen wirkende Last auf.

Da die ersten Wälzkörper ihre Standzeit im Freilaufabschnitt verbracht haben, weisen sie - ggf. im Gegensatz zu den zweiten Wälzkörpern - keine Abplattungen auf. Selbst wenn die zweiten Wälzkörper Abplattungen zeigen, beeinträchtigen diese Abplattungen die Laufeigenschaften nicht, da der Abstand der Auszugsschienen zueinander von den ersten Wälzkörpern bestimmt wird. In der entsprechenden Drehstellung der deformierten zweiten Wälzkörper, in der die Abplattungen zu den Laufschienen weisen, folgt die obere, getragene Auszugsschiene der Form der zweiten Wälzkörper nicht, sondern verlagert ihr Gewicht vollständig auf die ersten Wälzkörper.

In einer vorteilhaften Ausgestaltung der Auszugsführung ist der Freilaufabschnitt als eine Sicke, Ausnehmung, Ausprägung oder Rampe ausgebildet. Bevorzugt ist der so ausgebildete Freilaufabschnitt in eine der Laufflächen integriert. Die genannten Ausbildungen stellen einfach zu realisierende und gut in die Laufflächen integrierbare Ausgestaltungen des Freilaufabschnitts dar.

In einer weiteren vorteilhaften Ausgestaltung befinden sich in dem eingefahrenen Zustand der Auszugsführung die ersten Wälzkörper nicht im Kontakt mit beiden Laufflächen, zwischen denen sie angeordnet sind. So wird sicher erreicht, dass sich die ersten Wälzkörper während einer Standzeit nicht verformen.

In einer weiteren vorteilhaften Ausgestaltung der Auszugsführung unterscheidet sich der Abstand der Laufflächen innerhalb und außerhalb des Freilaufabschnitts um weniger als 10% und bevorzugt weniger als 5 % des Durchmessers der ersten und zweiten Wälzkörper. Diese Abstandsunterschiede haben sich als ausreichend groß zur Entlastung der ersten Wälzkörper herausgestellt. Gleichzeitig sind Abstandsunterschiede dieser Größe ausreichend klein, um gut in den Laufflächen bzw. den Führungsschienen realisiert werden zu können, ohne dass sich Einflüsse auf die Dimensionierung der Führungsschienen ergeben.

In einer weiteren vorteilhaften Ausgestaltung der Auszugsführung sind innerhalb eines Wälzkörperkäfigs mehrere zweite Wälzkörper in Längsrichtung der Auszugsführung hintereinander angeordnet. Zusätzlich können weitere Wälzkörper vorgesehen sein. Auf diese Weise kann die Erfindung bei Wälzkörperanordnungen mit mehreren Wälzkörpern eingesetzt werden.

In einer weiteren vorteilhaften Ausgestaltung der Auszugsführung bestehen die ersten und/oder zweiten Wälzkörper und/oder ggf. die weiteren Wälzkörper aus Kunststoff. Mit Kunststoffwälzkörpern kann ein verringertes Abrollgeräusch der Auszugsführung erzielt werden. Da durch den erfindungsgemäßen Freilaufabschnitt zudem die bei Kunststoffwälzkörpern nach längerer Standzeit auftretenden Rumpelgeräusche verhindert werden, sind Kunststoffwälzkörper im Rahmen der Erfindung besonders geeignet. Dadurch, dass nach einer längeren Standzeit die nicht deformierten ersten Wälzkörper den Abstand der Laufflächen zusammenwirkender Führungsschienen bestimmen, führt auch eine eventuelle Abplattung der zweiten Wälzkörper nicht zu einem Rumpelgeräusch. Auch für die zweiten Wälzkörper kann daher im Rahmen der Erfindung Kunststoff als Material gewählt werden.

In einer weiteren vorteilhaften Ausgestaltung der Auszugsführung unterscheiden sich die ersten und die zweiten Wälzkörper und ggf. die weiteren Wälzkörper in ihrer Geometrie, ihrem Material, ihrer Härte und/oder ihrer Breite. Die weiteren Wälzkörper können sich zudem in ihrem Durchmesser von den ersten und zweiten Wälzkörpern unterscheiden. Der erfindungsgemäße Freilaufabschnitt führt bei nominell gleichem Durchmesser der ersten und die zweiten Wälzkörper zu dem gewünschten Entlastungseffekt der ersten Wälzkörper im eingefahrenen Zustand der Auszugsführung. Unabhängig davon können jedoch vorteilhaft andere Materialeigenschaften und/oder Geometrien - und für die weiteren Wälzkörper auch unterschiedliche Durchmesser - der verschiedenen Wälzkörper gewählt werden, um optimale Laufeigenschaften zu erzielen.

Die Erfindung wird nachfolgend anhand von Ausführungsbeispielen mithilfe von Figuren näher erläutert.

Die Figuren zeigen:
- Fig. 1: ein Ausführungsbeispiel einer Auszugsführung in einer Querschnittsdarstellung;
- Fig. 2: einen erster Längsschnitt durch die Auszugsführung der Fig. 1;
- Fig. 3: einen zweiter Längsschnitt durch die Auszugsführung der Fig. 1; und
- Fig. 4 a bis c: jeweils eine schematische Darstellung des Lagerbereichs einer Auszugsführung in verschiedenen Auszugspositionen.

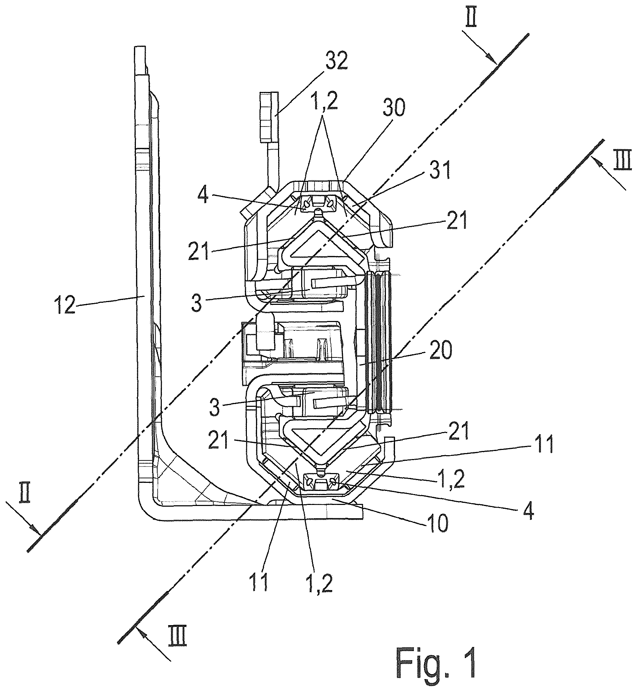

Fig. 1 zeigt ein Ausführungsbeispiel einer Auszugsführung in einer Querschnittsdarstellung. Die Auszugsführung weist drei Führungsschienen auf, eine äußere Führungsschiene 10, nachfolgend auch Korpusschiene 10 genannt, eine mittlere Führungsschiene 20, nachfolgend auch Mittelschiene 20 genannt, und eine innere Führungsschiene 30, nachfolgend auch als Laufschiene 30 bezeichnet. Die Mittelschiene 20 ist dabei gegenüber der Korpusschiene 10 und gegenüber der Laufschiene 30 jeweils über Wälzlager verschiebbbar gelagert. Von den Wälzlagern sind erste Wälzkörper 1, zweite Wälzkörper 2 und weitere Wälzkörper 3 in der Fig. 1 sichtbar und mit Bezugszeichen versehen. Die Wälzkörper 1, 2 und 3 sind in Wälzkörperkäfigen 4 gehalten, die in der Fig. 1 nur ansatzweise zu erkennen sind. Die Ausgestaltung der Auszugsführung als sogenannter Vollauszug mit drei Führungsschienen ist rein beispielhaft. Die erfindungsgemäße Ausgestaltung einer Auszugsführung kann ebenso bei Verwendung von nur zwei Führungsschienen, einem sogenannten Teilauszug, umgesetzt werden.

In dem dargestellten Ausführungsbeispiel ist die Korpusschiene 10 in etwa c-förmig ausgeführt, wobei die offene Seite des c-förmigen Profils in der Darstellung der Fig. 1 nach rechts weist. An der der offenen Seite gegenüberliegenden Längsseite der Korpusschiene 10 sind zwei oder mehrere Montagelaschen 12 befestigt. Diese dienen der Festlegung der Korpusschiene 10 an einem Möbelkorpus, beispielsweise einem Küchenschrank.

Die Laufschiene 30 ist in ihrem Profil ebenfalls in etwa c-förmig ausgestaltet, wobei sie nach unten hin zur Mittelschiene 20 geöffnet ist. Die Laufschiene 30 weist Befestigungsmittel 32 auf, mit denen sie an einem bewegbaren Möbelteil, beispielsweise einem Schubkasten, festgelegt werden kann.

Die Mittelschiene 20 ist vertikal zwischen der Korpusschiene 10 und der Laufschiene 30 angeordnet. Die Mittelschiene 20 ist in etwa u-förmig ausgeführt, wobei die Basis des u-förmigen Profils vertikal angeordnet ist. Die Breite der Basis bestimmt den vertikalen Abstand zwischen der Laufschiene 30 und der Korpusschiene 10. Die beiden Schenkel des u-förmigen Profils der Mittelschiene 20 ragen jeweils in den inneren Bereich der Korpusschiene 10 bzw. der Laufschiene 30 hinein. In diesem Bereich sind die Wälzlager angeordnet.

Vertikal zwischen der Korpusschiene 10 und der Laufschiene 30 bzw. horizontal zwischen der Basis des u-förmigen Profils der Mittelschiene 20 und den Montagelaschen 12 der Korpusschiene 10 ist in dem verbleibenden Freiraum eine Einzugs- und Dämpfungsvorrichtung 40 angeordnet. Die Anordnung der Führungsschienen 10, 20, 30 zueinander ist ebenso wie die Profilierung dieser Führungsschienen 10, 20 und 30 rein beispielhaft. Die Einzugs- und Dämpfungsvorrichtung 40 stellt ein optionales Element dar.

Jedes der Wälzlager zwischen der Korpusschiene 10 und der Mittelschiene 20 bzw. zwischen der Mittelschiene 20 und der Laufschiene 30 weist drei Reihen von zylindrischen Wälzkörpern 1, 2 bzw. 3 auf, die in einer Dreiecksanordnung zueinander ausgerichtet sind. Die weiteren Wälzkörper 3 sind dabei drehbar um eine horizontale Achse gelagert. Die ersten und zweiten Wälzkörper 1, 2 sind in zueinander v-förmig ausgerichteten Reihen mit einer gegenüber der horizontalen und der vertikalen geneigten Drehachse drehbar gelagert. Die Reihen mit den ersten und zweiten Wälzkörpern 1, 2 dienen der Aufnahme der auf die Laufschiene 30 wirkenden Gewichtskraft des geführten Möbelteils. Die weiteren Wälzkörper 3 mit der horizontalen Drehachse nehmen nicht die Gewichtskraft selbst, sondern ein bei ausgezogener Auszugsführung von der Gewichtskraft hervorgerufenes Kippmoment auf.

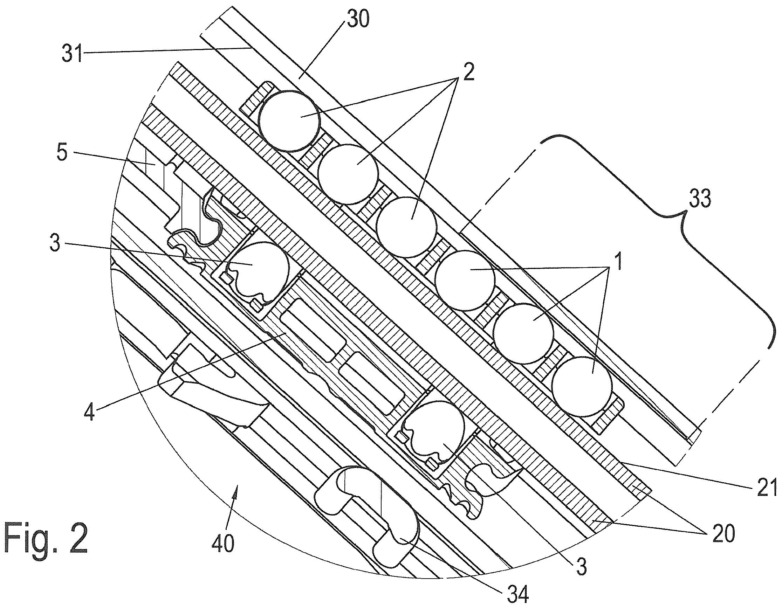

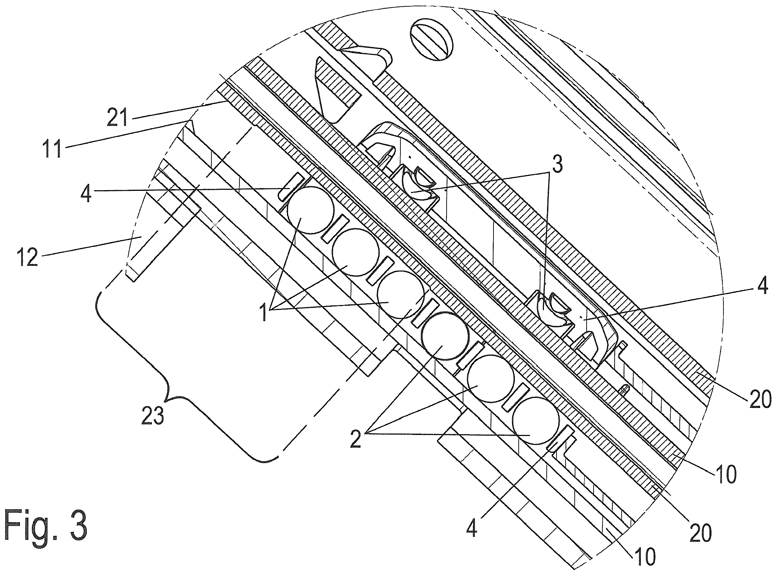

Die Ausgestaltung der Wälzlager ist in Längsschnitten in den Fig. 2 und 3 detaillierter dargestellt. Die Lage des jeweiligen Schnittes ist in Fig. 1 mit entsprechenden römischen Zahlen gekennzeichnet.

In Fig. 2 ist der Schnitt durch das zwischen der Mittelschiene 20 und der Laufschiene 30 angeordnete Wälzlager dargestellt. Von den beiden Wälzlagerreihen mit den Wälzlagern 1 und 2 ist in dieser Figur nur eine Reihe sichtbar, die mit sechs hier zylindrischen Wälzkörpern 1, 2 bestückt ist. In der dritten Wälzkörperreihe, die der Aufnahme von Kippmomenten dient, sind zwei der weiteren Wälzkörper 3 drehbar angeordnet, die in der Fig. 2 in einer teilgeschnittenen Ansicht zu erkennen sind. Alle Wälzkörper 1, 2, 3 sind in dem Wälzkörperkäfig 4 gehalten. Zwischen der Laufschiene 30 und der Mittelschiene 20 ist ein weiterer derartiger Wälzkörperkäfig 4 mit entsprechenden Wälzkörpern 1 bis 3 vorgesehen, der über ein Verbindungsstück 5 mit dem dargestellten Wälzkörperkäfig 4 beabstandet gekoppelt ist. Im unteren Bereich der Fig. 2 ist ein Teil der Einzugs- und Dämpfungsvorrichtung 40 zu erkennen sowie ein damit zusammenwirkender und an der Laufschiene 30 befestigter Mitnehmer 34.

Die ersten und zweiten Wälzkörper 1, 2 der dargestellten Wälzkörperreihe laufen auf einer Lauffläche 21 der Mittelschiene 20 sowie einer Lauffläche 31 der Laufschiene 30 ab.

Bei dem dargestellten Ausführungsbeispiel sind jeweils drei erste Wälzkörper 1 und drei zweite Wälzkörper 2 vorgesehen. Die ersten Wälzkörper 1 und die zweiten Wälzkörper 2 weisen jeweils den gleichen Durchmesser auf. Sie sind bevorzugt aus Kunststoff hergestellt, wobei die ersten Wälzkörper 1 und die zweiten Wälzkörper 2 auch hinsichtlich ihres Materials identisch sein können, aber nicht müssen. Es ist auch möglich, für die ersten Wälzkörper 1 und die zweiten Wälzkörper 2 unterschiedlich harte Materialien vorzusehen. Weiter können sich die ersten Wälzkörper 1 und die zweiten Wälzkörper 2 in ihrer Geometrie (z.B. zylindrische Rolle, Kugel) und/oder ihrer Breite unterscheiden.

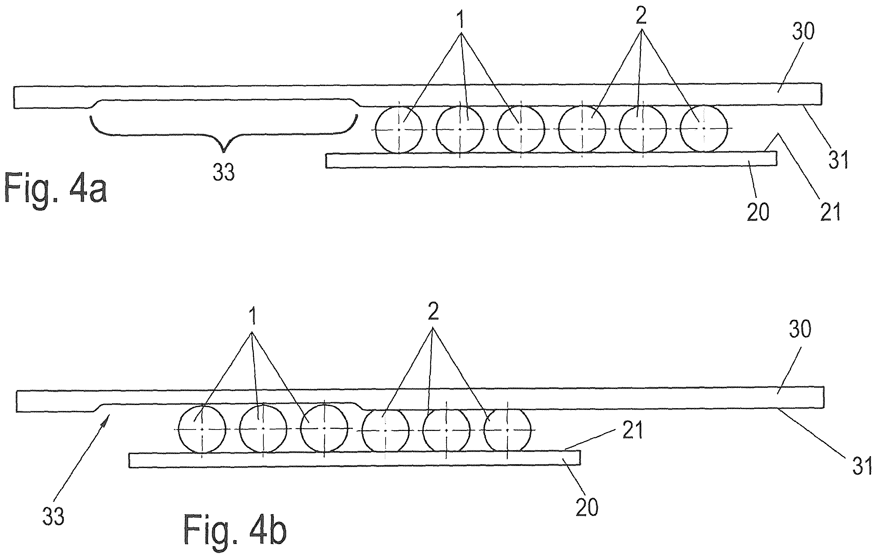

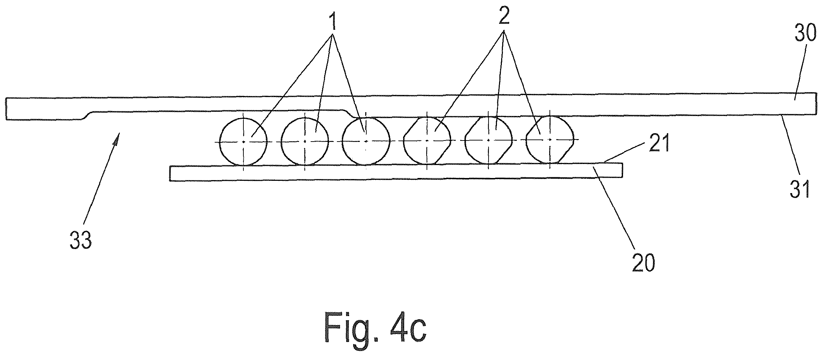

Dargestellt ist in der Fig. 2 die Position des Wälzkörperkäfigs 3 in einer vollständig eingefahrenen Stellung der Auszugsführung. In dieser Position sind die drei ersten Wälzkörper 1 in einem Bereich der Lauffläche 31 der Laufschiene 30 positioniert, in dem in der Laufschiene 30 ein Freilaufabschnitt 33 ausgebildet ist. Innerhalb des Freilaufabschnitts 33 sind die Laufflächen 21 und 31 weiter voneinander beabstandet, als im übrigen Bereich der Laufschiene 30 bzw. der Mittelschiene 20. Der Freilaufabschnitt 33 ist hier durch eine Sicke oder Ausnehmung in der Laufschiene gebildet. Es wäre jedoch ebenso möglich, einen Freilaufabschnitt in der Lauffläche 21 der Mittelschiene 20 vorzusehen. Der Freilaufabschnitt 33 hat zur Folge, das in der gezeigten vollständig eingefahrenen Stellung der Auszugsführung die ersten Wälzkörper 1 entlastet und nur die zweiten Wälzkörper 2 durch das Gewicht des getragenen Möbelteils belastet sind. Die damit verbundenen Vorteile werden im Zusammenhang mit den schematischen Zeichnungen der Fig. 4 näher erläutert.

Fig. 3 zeigt in ähnlicher Weise wie Fig. 2 einen Ausschnitt eines Längsschnitts durch die Auszugsführung der Fig. 1. Dargestellt ist der Bereich des Wälzlagers zwischen der Korpusschiene 10 und der Mittelschiene 20. Der Schnitt ist wiederum so gelegt, dass eine der mit den ersten Wälzkörpern 1 und den zweiten Wälzkörpern 2 bestückten Wälzkörperreihe vollgeschnitten sichtbar ist. Die zweite der mit diesen Wälzkörpern 1, 2 bestückten Wälzkörperreihen ist nicht zu sehen. Die mit zwei der weiteren Wälzkörpern 3 bestückte Wälzkörperreihe ist teilgeschnitten zu erkennen.

Wiederum sind drei erste Wälzkörper 1 und drei zweite Wälzkörper 2 in der dargestellten Wälzkörperreihe vorgesehen. Diese laufen zwischen einer Lauffläche 11 der Korpusschiene 10 und einer Lauffläche 21 der Mittelschiene 20 ab. In dieser Lauffläche 21 der Mittelschiene 20 ist ein Freilaufbereich 23 als eine Ausnehmung bzw. Sicke ausgebildet. Dargestellt ist in Fig. 3 die Position des Wälzkörperkäfigs 3 in dem eingefahrenen Zustand der Auszugsführung, wobei die drei ersten Wälzkörper 1 in dieser Position der Auszugsführung in dem Freilaufbereich 23 angeordnet sind. Der Freilaufbereich 23 zeichnet sich ebenso wie der Freilaufbereich 33 der Fig. 2 dadurch aus, dass die entsprechenden Laufflächen, hier die Laufflächen 11 und 21 der beteiligten Führungsschienen, hier der Führungsschienen 10, 20, weiter voneinander beabstandet sind als im übrigen Verlauf der Führungsschienen. Entsprechend sind in der dargestellten eingefahrenen Stellung der Auszugsführung die ersten Wälzkörper 1 entlastet und nur die zweiten Wälzkörper 2 tragen die Last des geführten Möbelteils.

In Fig. 4 ist in drei Teilbildern a, b, c jeweils in einer schematischen Zeichnung der Bereich eines der Wälzlager einer Auszugsführung für drei verschiedene Stellungen der Auszugsführung wiedergegeben. Beispielhaft gibt die Fig. 4 den Lagerbereich zwischen der Laufschiene 30 und der Mittelschiene 20 gemäß Fig. 2 wieder. Fig. 4 kann jedoch ebenso auf die Korpusschiene 10 und die Mittelschiene 20 bzw. auf zwei beliebige Führungsschienen übertragen werden.

In Fig. 4a ist eine teilausgezogene Stellung der Auszugsführung wiedergegeben. In dieser Stellung befindet sich keiner der Wälzkörper 1, 2 im Freilaufabschnitt 33. Alle sechs ersten und zweiten Wälzkörper 1, 2 laufen zwischen den Laufflächen 21 und 31 ab und tragen gleichermaßen zur Lagerung bei. Es wird zudem davon ausgegangen, dass keiner der ersten oder zweiten Wälzkörper 1, 2 deformiert ist. Die Fig. 4a gibt somit den Normalzustand beim Betätigen der Auszugsvorrichtung an.

In Fig. 4b ist die Auszugsführung in einem eingeschobenen Zustand wiedergegeben. In diesem Zustand liegen die ersten Wälzkörper 1 im Bereich des Freilaufabschnitts 33, wohingegen die zweiten Wälzkörper 2 sich außerhalb des Freilaufabschnitts 33 zwischen den Laufflächen 21 und 31 befinden. Die Fig. 4b gibt den Zustand der zweiten Wälzkörper 2 nach einer längeren Standzeit in dieser Position wieder. Die zweiten Wälzkörper 2 sind dabei durch das von ihnen getragene Gewicht an den Kontaktflächen zu den Laufflächen 21 und 31 deformiert. Die Deformation ist in dieser schematischen Zeichnung der Fig. 4b gegenüber der Realität übertrieben stark dargestellt. Tatsächlich liegt die Deformation in einer Größenordnung von einem oder wenigen zehntel Millimetern (mm), vorzugsweise von kleiner oder gleich 0,1 mm, bei einem typischen Durchmesser der Wälzkörper 2 im Bereich von einigen Millimetern, beispielsweise von 6 mm. Entsprechend ist ein Unterschied im Abstand der Laufflächen 23, 33 innerhalb und außerhalb des Freilaufbereichs 33 in dieser Größenordnung von einem oder wenigen zehntel Millimetern ausreichend, um die ersten Wälzkörper 1 im Freilaufbereich 33 vollständig oder zumindest wesentlich zu entlasten.

Die in Fig. 4b dargestellte Abplattung der zweiten Wälzkörper 2 würde bei einer Auszugsführung nach dem Stand der Technik, bei der der Freilaufabschnitt 33 nicht vorgesehen ist, zu einem unrunden Lauf der zweiten Wälzkörper 2 und damit zu einer erhöhten Vibrations- und Geräuschbelastung beim Betätigen der Auszugsführung führen. Diese Beeinträchtigung ist bei geeigneter Materialauswahl reversibel, da die zweiten Wälzkörper 2 durch die mit der Bewegung verbundenen Walkvorgänge wieder ihre nahezu ursprüngliche runde Form annehmen.

Fig. 4c zeigt die Auswirkungen des erfindungsgemäßen Freilaufabschnitts 33 beim Verfahren der Auszugsführung aus der in Fig. 4b dargestellten Standposition. Bereits nach einer kurzen Relativbewegung der Führungsschienen 20, 30 zueinander verlässt der in der Fig. 4c rechte der ersten Wälzkörper 1 den Freilaufabschnitt 33. Beim weiteren Ausziehen der Auszugsführung verlassen auch der mittlere und der linke der ersten Wälzkörper 1 den Freilaufabschnitt 33. Der Abstand zwischen der Lauffläche 21 der Mittelschiene 20 und der Lauffläche 31 der Laufschiene 30 wird durch den Durchmesser der ersten Wälzkörper 1 bestimmt. Da die ersten Wälzkörper 1 aufgrund der Entlastung im Freilaufabschnitt 33 in der Standposition nicht deformiert wurden, zeigen sie keine Abplattungen, die zu Vibrationen und einem erhöhten Laufgeräusch führen könnten. Auch in einer Position, in der die zweiten Wälzkörper 2 eine halbe Drehung vollführt haben und wiederum mit ihren Abplattungen zu den Laufflächen 21 und 31 hinweisen, behalten die Laufschienen 20 und 30 ihren Abstand aufgrund der ersten Wälzkörper 1 im Wesentlichen bei. Aufgrund der Abplattung der zweiten Wälzkörper ergibt sich unter Umständen eine leichte Elongation der Wälzkörper in der dazu quer verlaufenden Richtung, die sich zwar nicht störend im Hinblick auf Vibrationen und Geräusche auswirkt, die jedoch zu einem Durchwalken der zweiten Wälzkörper 2 führt, wodurch diese nach einem oder mehrmaligen Betätigen der Auszugsführung wiederum ihre ursprüngliche runde Form einnehmen. Zudem kann nach der Entlastung aus der in Fig. 4b dargestellten Position bei den zweiten Wälzkörpern 2 eine Relaxation in die Ursprungsform auch ohne ein Durchwalken einsetzen.

Die Ränder des Freilaufbereichs 33 sind in der Fig. 4 beispielhaft stufenförmig dargestellt. Alternativ und auch vorteilhaft ist ein weicherer Übergang, z.B. eine Rampe, um das Ausfahren der ersten Wälzkörper 1 aus dem Freilaufbereich 33 zu erleichtern und für den Benutzer den Übergang nicht spürbar werden zu lassen.

### Bezugszeichenliste

- 1: erster Wälzkörper
- 2: zweiter Wälzkörper
- 3: weiterer Wälzkörper
- 4: Wälzkörperkäfig
- 5: Verbindungsstück

- 10: äußere Führungsschiene (Korpusschiene)
- 11: Lauffläche
- 12: Montagelaschen

- 20: mittlere Führungsschiene (Mittelschiene)
- 21: Lauffläche
- 23: Freilaufabschnitt

- 30: innere Führungsschiene (Laufschiene)
- 31: Lauffläche
- 32: Befestigungsmittel
- 33: Freilaufabschnitt
- 34: Mitnehmer

- 40: Einzugs- und Dämpfungsvorrichtung

## Patentansprüche

1. Auszugsführung für relativ zueinander bewegbare Möbelteile, aufweisend mindestens zwei Auszugsschienen (10, 20, 30) mit mindestens einer Lauffläche (11, 21, 31), zwischen denen mindestens ein erster Wälzkörper (1) und mindestens ein zweiter Wälzkörper (2) angeordnet sind, die in mindestens einem Wälzkörperkäfig (4) drehbar gehalten sind, wobei der mindestens eine erste Wälzkörper (1) und der mindestens eine zweite Wälzkörper (2) des Wälzkörperkäfigs (4) einen gleichen nominellen Durchmesser aufweisen, wobei mindestens eine der Laufflächen (11, 21, 31) einen Freilaufabschnitt (23, 33) aufweist, in dem nur der mindestens eine erste Wälzkörper (1) in einem eingefahrenen Zustand der Auszugsführung positioniert ist, wobei innerhalb des Freilaufabschnitts (23, 33) die Laufflächen (11, 21, 31) einen größeren Abstand zueinander aufweisen als außerhalb des Freilaufabschnitts (23, 33), **dadurch gekennzeichnet, dass** innerhalb eines Wälzkörperkäfigs (4) mehrere erste Wälzkörper (1) in Längsrichtung der Auszugsführung hintereinander angeordnet sind und dass der Freilaufabschnitt (23, 33) eine Länge aufweist, die mindestens so groß ist wie der maximale Abstand von zwei der mehreren ersten Wälzkörper (1).

2. Auszugsführung nach Anspruch 1, bei der der Freilaufabschnitt (23, 33) als eine Sicke, Ausnehmung, Ausprägung oder Rampe ausgebildet ist.

3. Auszugsführung nach Anspruch 2, bei der der Freilaufabschnitt (23, 33) in eine der Laufflächen (11, 21, 31) integriert ist.

4. Auszugsführung nach einem der Ansprüche 1 bis 3, bei der in dem eingefahrenen Zustand der Auszugsführung sich die ersten Wälzkörper (1) nicht im Kontakt mit beiden Laufflächen (11, 21, 31), zwischen denen sie angeordnet sind, befinden.

5. Auszugsführung nach einem der Ansprüche 1 bis 4, bei der sich der Abstand der Laufflächen (11, 21, 31) innerhalb und außerhalb des Freilaufabschnitts (23, 33) um weniger als 10% und bevorzugt weniger als 5 % des Durchmessers der ersten und zweiten Wälzkörper (1, 2) unterscheidet.

6. Auszugsführung nach einem der Ansprüche 1 bis 5, bei der innerhalb eines Wälzkörperkäfigs (4) mehrere zweite Wälzkörper (2) in Längsrichtung der Auszugsführung hintereinander angeordnet sind.

7. Auszugsführung nach einem der Ansprüche 1 bis 6, bei der neben den ersten und zweiten Wälzkörpern (1, 2) weitere Wälzkörper (3) vorhanden sind.

8. Auszugsführung nach einem der Ansprüche 1 bis 7, bei der die ersten und/oder zweiten Wälzkörper (1) und/oder ggf. die weiteren Wälzkörper (3) aus Kunststoff bestehen.

9. Auszugsführung nach einem der Ansprüche 1 bis 8, bei der sich die ersten und die zweiten Wälzkörper (1, 2) und ggf. die weiteren Wälzkörper (3) in ihrer Geometrie, ihrem Material, ihrer Härte und/oder ihrer Breite unterscheiden.

10. Auszugsführung nach einem der Ansprüche 7 bis 9, bei der sich die weiteren Wälzkörper (3) in ihrem Durchmesser von den ersten und zweiten Wälzkörpern (1, 2) unterscheiden.

## Claims

1. A pull-out guide for furniture parts which can be moved in relation to each other, comprising at least two pull-out rails (10, 20, 30) having at least one running surface (11, 21, 31), between which at least one first rolling element (1) and at least one second rolling element (2) are arranged, which rolling elements are rotatably retained in at least one rolling-element cage (4), wherein the at least one first rolling element (1) and the at least one second rolling element (2) of the rolling-element cage (4) have an identical nominal diameter, whereby at least one of the running surfaces (11, 21, 31) has a free-running segment (23, 33), in which only the at least one first rolling element (1) is positioned in a retracted state of the pull-out guide, wherein the running surfaces (11, 21, 31) have a greater distance from each other within the free-running segment (23, 33) than outside the free-running segment (23, 33), **characterized in that** several first rolling elements (1) are arranged within a rolling-element cage (4) one after the other in the longitudinal direction of the pull-out guide and that the free-running segment (23, 33) has a length which is as at least as great as the maximum distance of two of the multiple first rolling elements (1).

2. A pull-out guide according to claim 1, wherein the free-running segment (23, 33) is formed as a bead, a recess, an embossed portion or a ramp.

3. A pull-out guide according to claim 2, wherein the free-running segment (23, 33) is integrated in one of the running surfaces (11, 21, 31).

4. A pull-out guide according to one of the claims 1 to 3, wherein in the retracted state of the pull-out guide the first rolling elements (1) are not in contact with the two running surfaces (11, 21, 31) between which they are arranged.

5. A pull-out guide according to one of the claims 1 to 4, wherein the distance of the running surfaces (11, 21, 31) differ within and outside the free-running segment (23, 33) by less than 10% and preferably less than 5% of the diameter of the first and the second rolling element (1, 2).

6. A pull-out guide according to one of the claims 1 to 5, wherein several second rolling elements (2) are arranged within a rolling-element cage (4) one after the other in the longitudinal direction of the pull-out guide.

7. A pull-out guide according to one of the claims 1 to 6, wherein further rolling elements (3) are present in addition to the first and second rolling elements (1, 2).

8. A pull-out guide according to one of the claims 1 to 7, wherein the first and/or the second rolling elements (1) and/or optionally the further rolling elements (3) consist of plastic.

9. A pull-out guide according to one of the claims 1 to 8, wherein the first and the second rolling elements (1, 2) and optionally the further rolling elements (3) differ with respect to their geometry, their material, their hardness and/or their width.

10. A pull-out guide according to one of the claims 7 to 9, wherein the further rolling elements (3) differ with respect to their diameter from the first and second rolling elements (1, 2).

## Revendications

1. Guide d'extraction pour des parties de meuble mobiles les unes par rapport aux autres, présentant au moins deux rails d'extraction (10, 20, 30) avec au moins une surface de roulement (11, 21, 31), entre lesquels sont disposés au moins un premier roulement (1) et au moins un deuxième roulement (2) qui sont retenus avec possibilité de rotation dans au moins une cage de roulement (4), dans lequel l'au moins un premier roulement (1) et l'au moins un deuxième roulement (2) de la cage de roulement (4) ont un même diamètre nominal, dans lequel au moins une des surfaces de roulement (11, 21, 31) présente une section de roulement libre (23, 33) dans laquelle seul l'au moins un premier roulement (1) est positionné quand le guide d'extraction est rétracté, les surfaces de roulement (11, 21, 31) étant plus écartées à l'intérieur de la section de roulement libre (23, 33) qu'en dehors de la section de roulement libre (23, 33), **caractérisé en ce que** plusieurs premiers roulements (1) sont disposés les uns à la suite des autres dans le sens de la longueur du guide d'extraction dans une cage de roulement (4) et **en ce que** la section de roulement libre (23, 33) présente une longueur au moins égale à l'écart maximal entre deux des plusieurs premiers roulements (1).

2. Guide d'extraction selon la revendication 1, dans lequel la section de roulement libre (23, 33) est conformée comme une moulure, un creux, une gravure ou un plan incliné.

3. Guide d'extraction selon la revendication 2, dans lequel la section de roulement libre (23, 33) est intégrée dans une des surfaces de roulement (11, 21, 31).

4. Guide d'extraction selon l'une des revendications 1 à 3, dans lequel, quand le guide d'extraction est rétracté, les premiers roulements (1) ne se trouvent pas en contact avec les deux surfaces de roulement (11, 21, 31) entre lesquelles ils sont disposés.

5. Guide d'extraction selon l'une des revendications 1 à 4, dans lequel la distance entre les surfaces de roulement (11, 21, 31) diffère à l'intérieur et à l'extérieur de la section de roulement libre (23, 33) de moins de 10 %, de préférence moins de 5 %, du diamètre des premiers et deuxièmes roulements (1, 2).

6. Guide d'extraction selon l'une des revendications 1 à 5, dans lequel plusieurs deuxièmes roulements (2) sont disposés à l'intérieur d'une cage de roulement (4) les uns derrière les autres dans le sens de la longueur du guide d'extraction.

7. Guide d'extraction selon l'une des revendications 1 à 6, dans lequel d'autres roulements (3) sont prévus outre les premiers et deuxièmes roulements (1, 2).

8. Guide d'extraction selon l'une des revendications 1 à 7, dans lequel les premiers et/ou deuxièmes roulements (1) et/ou, le cas échéant, les autres roulements (3) se composent de plastique.

9. Guide d'extraction selon l'une des revendications 1 à 8, dans lequel les premiers et deuxièmes roulements (1, 2) et, le cas échéant, les autres roulements (3) sont différents par leur géométrie, leur matériau, leur dureté et/ou leur largeur.

10. Guide d'extraction selon l'une des revendications 7 à 9, dans lequel les autres roulements (3) ont un diamètre différent des premiers et deuxièmes roulements (1, 2).
